# EUROPEAN PATENT APPLICATION

(11) **EP 2 890 058 A1**
(43) Date of publication of application: **01.07.2015**
(21) Application number: 13831628.6
(22) Date of filing: 14.08.2013
(51) Int. Cl.: H04L 12/28

(54) **INFORMATION PROCESSING DEVICE**

(30) Priority: 24.08.2012 JP 2012185520
(71) Applicant: NEC Corporation, Tokyo 108-8001 (JP)
(72) Inventor: YOSHIMURA, Mikihiro, Tokyo 108-8001 (JP)
(74) Representative: Reeve, Nicholas Edward
(86) International application number: PCT/JP2013/004858
(87) International publication number: WO 2014/030321

(57) **Abstract**

An information processing device according to the present invention comprising: a management information storage means for storing management information; a reception means for receiving transmission data including management information from a predetermined network device; a management information update means for updating and storing the management information included in the transmission data into the management information storage means in a case that the management information included in the transmission data received from the predetermined network device is changed with respect to management information stored in the management information storage means; a transmission means for transmitting change management information that is information based on the changed management information, to still another network device, wherein the transmission means transmits the change management information to a network device specified based on information included in the transmission data received from the predetermined network device, as a transmission destination.

## Description

### TECHNICAL FIELD

The present invention relates to an information processing device. More specifically, the present invention relates an information processing device being connected with a network and has a data transmission function.

### BACKGROUND ART

By developing a network technology, various information processing devices are connected via a network and the information processing devices construct a network system being capable of transmitting data. In this type of network system, controlling and monitoring a network device is required to perform a stable transmission of data by the network device that is information processing device connected via a network.

Generally, it is possible to control and monitor network devices by collecting information of the each network device in a network by using a SNMP (Simple Network Management Protocol) after setting an IP address to the each network device. Meanwhile, the SNMP is a protocol for controlling and monitoring communication devices belonging to an IP (Internet Protocol) network via a network wherein the communication devices such as a router or a computer are connected with the network. A device to be a controlled object has a management information database called a MIB (Management Information Base), and a device for managing performs appropriate setting based on the MIB of the controlled object.
Patent Document 1: Japanese Unexamined Patent Application Publication No. 2011-223295

### SUMMARY

However, since controlling and monitoring network devices are performed between a monitoring device and the each network device, a problem causes wherein an amount of load on a network during network operation becomes larger when numbers of the network devices increase.

Besides, as disclosed in the patent document 1, there is a way for controlling and monitoring network devices by using a LLDP (Link Layer Discovery Protocol) that is a layer 2 level protocol to notify management information such as a type of network device, a type of terminal and setting information of a network device to neighboring devices. By this way, a connection relationship on a LAN (Local Area Network) can be grasped accurately and easily at a port level.

However, in a case of using the above-described LLDP, an information communication is performed among only neighboring devices. Besides, in a case that the information communication is performed transparently via the LLDP, information is transmitted by a multicast to all network devices in a same network. As a result of this, a problem of increasing an amount of load on a network during network operation occurs similarly as described above.

Accordingly, an object of the present invention is to provide an information processing device which is capable of solving the problem, "increasing an amount of load on a network during network operation".

An information processing device as an aspect of the present invention, the information processing device which is connected with a network configured by connecting a plurality of network devices, comprising:
a management information storage means for storing management information that is information representing a condition of a different network device;
a reception means for receiving transmission data from a predetermined network device, the transmission data including the management information of the predetermined network device;
a management information update means for updating and storing the management information included in the transmission data into the management information storage means in a case that the management information included in the transmission data being received from the predetermined network device is changed with respect to management information stored in the management information storage means; and
a transmission means for transmitting change management information that is information based on the changed management information, to still another network device, wherein the transmission means transmits the change management information to a network device as a transmission destination, the network device being specified based on information included in the transmission data being received from the predetermined network device.

Further, a program as another aspect of the present invention is a program comprising instructions for causing an information processing device, the information processing device being connected with a network configured by connecting a plurality of network devices, and the information processing device being equipped with a management information storage means for storing management information representing a condition of a different network device, to realize:
a reception means for receiving transmission data from a predetermined network device, the transmission data including the management information of the predetermined network device;
a management information update means for updating and storing the management information included in the transmission data into the management information storage means in a case that the management information included in the transmission data being received from the predetermined network device is changed with respect to management information stored in the management information storage means; and
a transmission means for transmitting change management information that is information based on the changed management information, to still another network device, wherein the transmission means transmits the change management information to a network device as a transmission destination, the network device being specified based on information included in the transmission data being received from the predetermined network device.

Further, an information processing method as another aspect of the present invention is an information processing method applied to an information processing device, the information processing device being connected with a network configured by connecting a plurality of network devices, and the information processing device being equipped with a management information storage means for storing management information representing a condition of a different network device,
the information processing method comprising:
receiving transmission data from a predetermined network device, the transmission data including the management information of the predetermined network device;
updating and storing the management information included in the transmission data into the management information storage means in a case that the management information included in the transmission data being received from the predetermined network device is changed with respect to management information stored in the management information storage means; and
transmitting change management information that is information based on the changed management information to still another network device, and also transmitting the change management information to a network device as a transmission destination, the network device being specified based on information included in the transmission data being received from the predetermined network device.

With the configurations as described above, the present invention can reduce a load on a network during a network operation.

### BRIEF DESCRIPTION OF DRAWINGS

Fig. 1 is a diagram showing a configuration and an operation of a network system according to the present invention;
Fig. 2 is a block diagram showing a configuration of a network device disclosed in Fig. 1;
Fig. 3 is a flowchart showing an operation of the network device disclosed in Fig.1;
Fig. 4 is a diagram showing a configuration and an operation of a different network system to be a comparison object of the operation of the network system according to the present invention.
Fig. 5 is a block diagram showing a configuration of an information processing device according to Supplementary Note 1 of the present invention;

### EXEMPLARY EMBODIMENT

### <First Exemplary Embodiment>

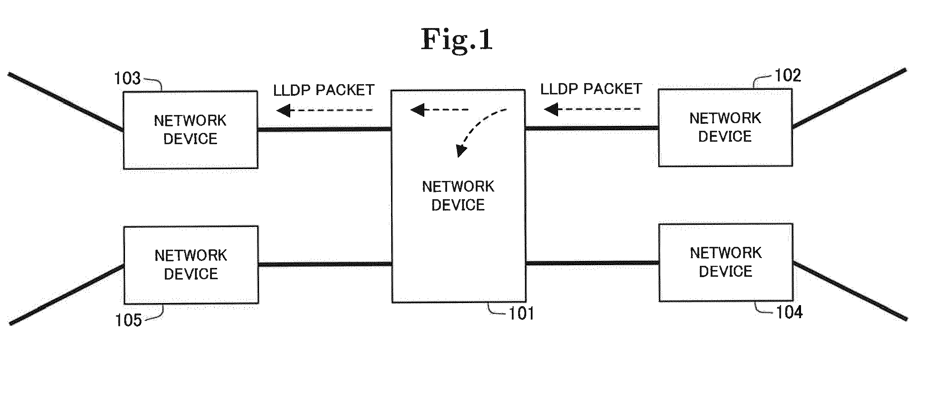

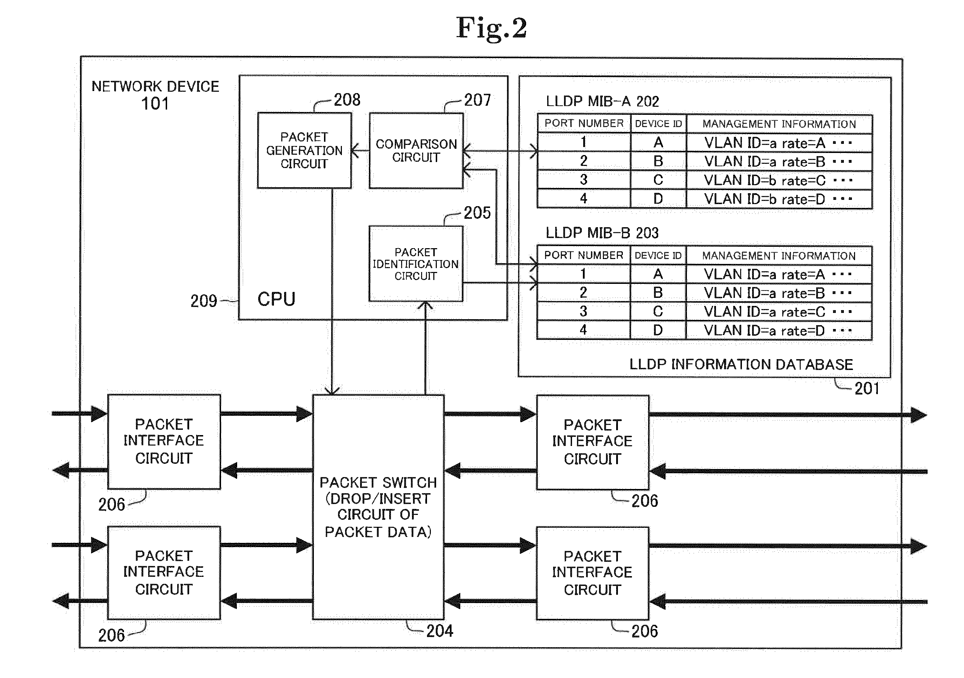

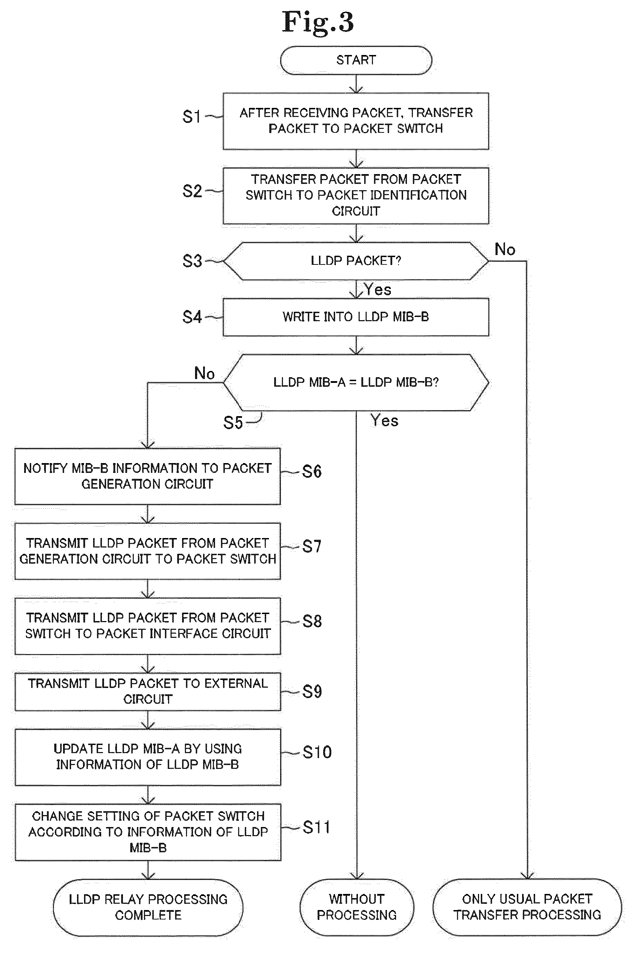

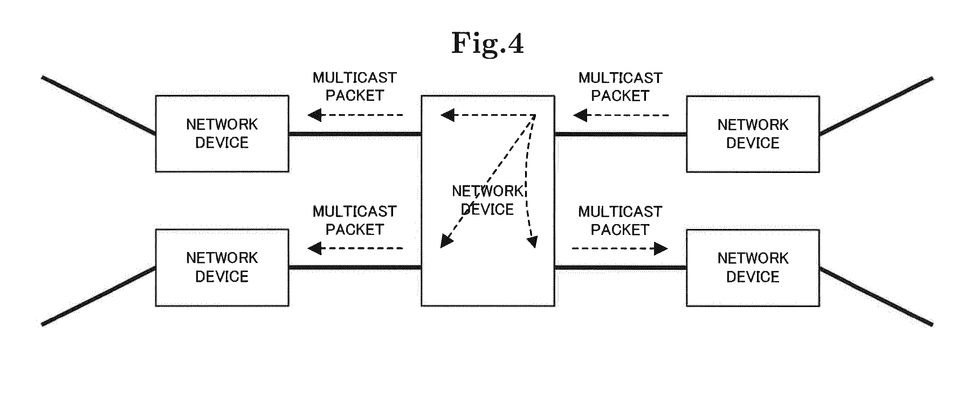

A first exemplary embodiment of the present invention will be described referring to Figs. 1 to 4. Fig. 1 is a diagram showing a configuration and an operation of a network system. Fig. 2 is a block diagram showing a configuration of a network device configuring the network system, and Fig.3 is a flowchart showing an operation of the network device. Fig. 4 is a diagram showing a configuration and an operation of a relevant network system.

### [Configuration]

As shown in Fig. 1, a network system according to the present invention is configured by connecting a wired network or a wireless network with each of a plurality of network devices 101-105. Meanwhile, the network device is an information processing device being capable of transmitting data, such as an IP phone, a printer, an access point, and a router. Below, as a network device shown by reference numeral 101 in Fig. 1, a configuration of the network device 101 for transferring data being transmitted from a predetermined network device to another network device, will be described.

As shown in Fig. 2, the network device 101 comprises a plurality of packet interface circuits 206 each for transmitting/receiving packet data between another network device respectively, a packet switch (a drop/an insert circuit of packet data) 204 for a packet data transfer processing. Besides, the network device 101 has a CPU (Central Processing Unit) 209 for performing a processing of packet data, wherein a packet identification circuit 205, a comparison circuit 207 and a packet generation circuit 208 are constructed respectively by embedding a program into the CPU 209 as shown in Fig. 2. In addition, the network device 101 comprises a storage device, and as shown in Fig. 2, the network device 101 comprises a LLDP information database 201 for storing LLDP information that is management information representing conditions of other network devices such as the network device 102. Below, each configuration will be described in detail.

The each packet interface circuit 206 is connected with the packet switch 204 respectively. The packet interface circuits 206 receive packet data from the other network devices 102-104 and transmit the received data to the packet switch 204 respectively, that is, the each packet interface circuit 206 receives packet data from outside of the network device 101 and transmits the received data to the packet switch 204. Besides, the each packet interface circuit 206 performs a processing to transmit packet data received from the packet switch 204 to outside of the network device 101.

The packet switch 204 is connected with each of the plurality of packet interface circuits 206, the packet identification circuit 205 and the packet generation circuit 208 respectively. In addition, the packet switch 204 performs a processing to transfer packet data received from the each packet interface circuit 206 to the packet identification circuit 205, and the packet switch 204 performs a processing to transfer packet data received from the packet generation circuit 208 to the each packet interface circuit 206.

Herein, the network device 101 performs a transfer processing of packet data including a LLDP packet. As described above, the LLDP (Link Layer Discovery Protocol) is the layer 2 level protocol to notify management information such as a type of network device and setting information of the network device to the neighboring device. Specifically, the LLDP packet includes a "device ID" that is information to identify a network device itself and a "port number" of the network device itself in a network with which the network device itself is connected, as management information representing a condition of the network device itself. Besides, the LLDP packet includes management information representing a condition of the network device itself in a region where can be defined arbitrary by network devices each other, for example, the LLDP packet includes a "VLAN ID" that is information to specify a virtual network to which the network device itself is belonged. In addition, information representing a bandwidth with which the network device itself is connected, or information to specify another network device to be a transfer destination of the LLDP packet is also included as management information in the LLDP packet.

The above-described LLDP packet is transmitted by each network device such as the network device 102 when setting of the network device itself is changed or at a predetermined intervals. Then, when the network device 101 receives the LLDP packet being transmitted from a predetermined neighboring network device such as the network device 102, the network device 101 operates so as to transfer the received LLDP packet to still another network device such as the network device 103. Actually, as described above, the processing to transfer the LLDP packet is performed on the packet switch 204, and an analysis processing of the LLDP is performed on such as the packet identification circuit 205 along with the transferring the LLDP packet.

The above-described packet identification circuit 205 (reception means) receives packet data (transmission data) being transmitted from the predetermined network device 102 and transferred by the packet switch 204, and the packet identification circuit 205 performs an identification whether or not a type of the received packet data is a LLDP packet. Such identification of the received packet data can be performed by checking content of information contained in a header part of the packet data. Then, in a case that the packet identification circuit 205 identifies that the received packet data is the LLDP packet, the packet identification circuit 205 writes the LLDP packet into a region of a LLDP MIB-B203 included in the LLDP information database 201. Herein, the LLDP MIB-B203 is a region to store temporally the received LLDP packet.

Besides, the comparison circuit 207 (management information update means) compares content of the LLDP packet being written into the region of the LLDP MIB-B203 included in the LLDP information database 201, with content of a LLDP packet being written into a region of a LLDP MIB-A202 included in the LLDP information database 201. Herein, the LLDP MIB-A202 is a master database to store management information included in LLDP packets that have ever been received from the each network device. Therefore, for example, the comparison circuit 207 compares "management information" included in the LLDP MIB-A202 with "management information" included in the LLDP MIB-B203 wherein both "management information" have the same "port number" or the same "device ID" with each other, and the comparison circuit 207 checks whether there is a difference between the both management information. Then, when there is a difference between the both management information, the comparison circuit 207 updates content of a corresponding LLDP packet included in the LLDP MIB-A202 by using content of the LLDP packet stored in the LLDP MIB-B203, and the comparison circuit 207 stores the updated LLDP packet into the LLDP MIB-A202. For example, when a "VLAN ID" that is "management information" corresponding to the predetermined network device 102 is changed, the LLDP MIB-A202 is updated so as to have the same VLAN ID as the changed VLAN ID. Then, the comparison circuit 207 notifies the packet generation circuit 208 of a LLDP packet generation notification when there is a difference between the both management information compared with each other.

The packet generation circuit 208 (transmission means) generates a LLDP packet in accordance with the LLDP packet generation notification notified by the comparison circuit 207 as described above, and the packet generation circuit 208 performs a packet communication to the packet switch 204. Specifically, when the LLDP packet transmitted from the predetermined network device 102 has a change, the packet generation circuit 208 generates newly a LLDP packet (change management information) including changed management information of the network device 102, and the packet generation circuit 208 transmits the generated LLDP packet to the packet switch 204.

Herein, the packet generation circuit 208 specifies another network device to be a transfer destination of the generated LLDP packet in accordance with information included in the LLDP packet being received from the predetermined network device 102, and the packet generation circuit 208 instructs the packet switch 204 to transfer the LLDP packet to the specified network device only. For example, the packet generation circuit 208 specifies a virtual network to which the predetermined network device 102 belongs, the virtual network is management information included in the LLDP packet being received from the predetermined network device 102, and the packet generation circuit 208 specifies another network device only belonging to the same virtual network as those of the network device 102 as the transfer destination.

By the above-described way, a change of management information of a network device can be transferred and notified to a specified network device. Specifically, according to the present invention, as shown in Fig. 1, when the network device 101 receives the LLDP packet from the predetermined network device 102, the newly generated LLDP packet including management information of the network device 102 is not transferred to other network devices 104 and 105, but transferred to only the specified network device 103 which needs the LLDP packet. As a result of this, the present invention can reduce further the load on the network during the network operation in comparison with a usual case shown in Fig. 4 in which a LLDP packet is transferred as a multicast packet for all other network devices.

Further, the packet generation circuit 208 may specify a network device to be a transfer destination of the generated LLDP packet in accordance with other information included in the received LLDP packet. For example, when a LLDP packet transmitted from the predetermined network device 102 includes previously information for specifying a network device to be a transfer destination (device specification information) such as a "device ID", the packet generation circuit 208 specifies a network device corresponding to the included device ID.

Besides, the packet generation circuit 208 may specify a network device to be a transfer destination depending on a change of management information included in the received LLDP packet. For example, assuming that "information of line bandwidth" is included as management information in a LLDP packet and the information of line bandwidth is changed, the packet generation circuit 208 may specify a network device as a transfer destination which belongs to the same virtual network as those of the network device having transmitted the LLDP packet to the packet generation circuit 208. As a result of this, required information can be notified to only the network device belonging to the virtual network in which the line bandwidth is changed, and thereby the load on the network can be reduced.

### [Operation]

Next, an operation of the above-mentioned network device 101 will be described referring to the flowchart in Fig. 3.

At first, when packet data is transmitted from the predetermined network device 102, the each packet interface circuit 206 of the network device 101 receives the packet data and transmits the received packet data to the packet switch 204 (step S1). Then, the packet switch 204 transfers the packet data to the packet identification circuit 205 (step S2).

Subsequently, the packet identification circuit 205 identifies whether or not the packet data is a LLDP packet (step S3). When the packet data is identified as the LLDP packet, the packet identification circuit 205 stores the LLDP packet including information (a port number, a device ID, management information etc.) into the LLDP MIB-B203 (step S4). Then, the comparison circuit 207 compares content of the LLDP MIB-A202 with content of the LLDP MIB-B203 (step S5). As a result of comparing, when there is a difference between the content of the LLDP MIB-A202 and the content of the LLDP MIB-B203, the comparison circuit 207 notifies management information newly registered in the LLDP MIB-B203 to the packet generation circuit 208 (step S6).

Further, the packet generation circuit 208 generates newly a LLDP packet based on the notified management information and transmits the LLDP packet to the packet switch 204 (step S7). Herein, the packet generation circuit 208 specifies a network device to be a transfer destination of the newly generated LLDP packet based on the management information newly registered in the LLDP MIB-B203 and the packet generation circuit 208 transmits the LLDP packet to the packet switch 204.

Then, the LLDP packet is transmitted from the packet switch 204 to one of the packet interface circuits 206 (step S8), and subsequently, the LLDP packet is transmitted from the packet interface circuit 206 to an external line (step S9). Herein, the LLDP packet is transmitted to only the network device 103 being specified as the transfer destination, but the LLDP packet is not transmitted to other network devices 104 and 105.

After that, the comparison circuit 207 updates the LLDP MIB-A202 by reflecting the content of the LLDP MIB-B203 in the content of the LLDP MIB-A202 (step S10). Thereby, the packet switch 204 changes setting to perform a packet transfer processing in accordance with management information included in the LLDP MIB-A202 (step S11). Herein, updating the LLDP MIB-A202 by the comparison circuit 207 may be performed at any timing.

As described above, according to the present invention, reducing a load on a network during a network operation can be realized by following three reasons.
(1) A setting of IP address is required for controlling by using the SNMP. To the contrary, according to the present invention, by using the LLDP that needs not the IP address, the setting of the IP address is not required during a network operation and thereby a load on an advance preparation is reduced.
(2) Since setting information can be notified to a remote device, cooperation of the setting information among a plurality of devices can be realized by using a change of setting information of one of the devices, and thereby numbers of network devices to be monitored can be reduced according to the present invention.
(3) Usually, a LLDP packet is transmitted as a multicast packet to all of network devices belonging to a same network (see Fig. 4). To the contrary, according to the present invention, a LLDP packet is capable to be transferred to only a device which can be identified by notification of management information, and thereby a load on a network is reduced.

While, in the above description, the case of transferring a LLDP packet is explained, the transferred data is not limited to the LLDP packet. Meanwhile, in the above description, the case of packet transmission network is explained, by changing the each packet interface circuit 206 of the network device shown in Fig.2 to a PoA circuit (packet over ATM), cooperation of management information among devices connected with each other via ATM network can be realized similarly as described above.

### <Supplementary Notes >

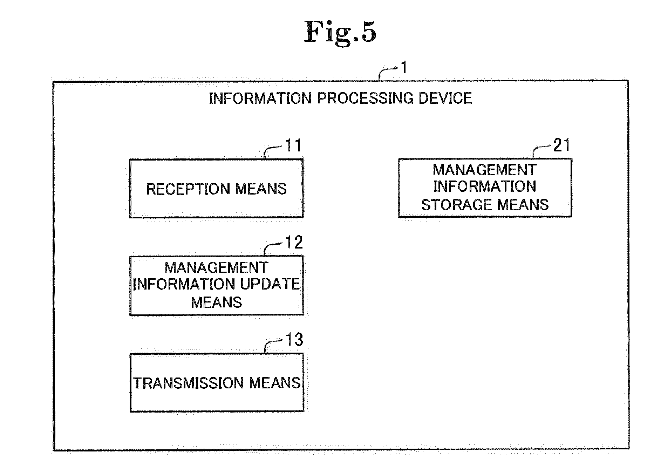

The whole or part of the exemplary embodiment disclosed above can be described as following supplementary notes. Below, the overview of the configurations of an information processing device (see Fig. 5), a program, and an information processing method according to the present invention will be described. However, the present invention is not limited to the following configurations.

### (Supplementary Note 1)

An information processing device 1 which is connected with a network configured by connecting a plurality of network devices, the information processing device 1 comprising:
a management information storage means 21 for storing management information that is information representing a condition of a different network device;
a reception means 11 for receiving transmission data from a predetermined network device, the transmission data including the management information of the predetermined network device;
a management information update means 12 for updating and storing the management information included in the transmission data into the management information storage means in a case that the management information included in the transmission data being received from the predetermined network device is changed with respect to management information stored in the management information storage means; and
a transmission means 13 for transmitting change management information that is information based on the changed management information, to still another network device, wherein the transmission means 13 transmits the change management information to a network device as a transmission destination, the network device being specified based on information included in the transmission data being received from the predetermined network device.

### (Supplementary Note 2)

The information processing device according to Supplementary Note 1 wherein:
the management information included in the transmission data being received from the predetermined network device includes network specification information for specifying a network to which the predetermined network device belongs, and
the transmission means specifies a network device belonging to the network being specified based on the network specification information included in the transmission data received from the predetermined network device, and transmits the change management information to the specified network device as a transmission destination.

### (Supplementary Note 3)

The information processing device according to Supplementary Note 1, wherein:
the management information included in the transmission data being received from the predetermined network device includes device specification information for specifying a network device, and
the transmission means transmits the change management information to a network device as a transmission destination, the network device being specified based on the network device specification information included in the transmission data being received from the predetermined network device.

### (Supplementary Note 4)

The information processing device according to Supplementary Note 1, wherein the transmission means specifies a network device based on the changed management information, and transmits the change management information to the specified network device as a transmission destination.

### (Supplementary Note 5)

The information processing device according to any of Supplementary Notes 1 to 4, wherein the management information update means
stores temporally the management information included in the transmission data being received from the predetermined network device,
compares the management information included in the transmission data being received from the predetermined network device with management information stored in the management information storage means, and as a result of comparing,
in a case that the management information included in the transmission data is changed with respect to the management information being stored in the management information storage means,
notifies the transmission means to transmit the change management information and subsequently,
updates and stores the management information included in the transmission data being temporally stored into the management information update means.

### (Supplementary Note 6)

The information processing device according to any of Supplementary Notes 1 to 5, wherein the transmission data is a LLDP packet.

### (Supplementary Note7)

A program comprising instructions for causing an information processing device, the information processing device being connected with a network configured by connecting a plurality of network devices, and the information processing device being equipped with a management information storage means for storing management information representing a condition of a different network device, to realize:
a reception means for receiving transmission data from a predetermined network device, the transmission data including the management information of the predetermined network device;
a management information update means for updating and storing the management information included in the transmission data into the management information storage means in a case that the management information included in the transmission data being received from the predetermined network device is changed with respect to management information stored in the management information storage means; and
a transmission means for transmitting change management information that is information based on the changed management information, to still another network device, wherein the transmission means transmits the change management information to a network device as a transmission destination, the network device being specified based on information included in the transmission data being received from the predetermined network device.

### (Supplementary Note 8)

The program according to Supplementary Note 7, wherein:
the management information included in the transmission data being received from the predetermined network device includes network specification information for specifying a network to which the predetermined network device belongs, and
the transmission means specifies a network device belonging to the network being specified based on the network specification information included in the transmission data received from the predetermined network device, and transmits the change management information to the specified network device as a transmission destination.

### (Supplementary Note 9)

An information processing method applied to an information processing device, the information processing device being connected with a network configured by connecting a plurality of network devices, and the information processing device being equipped with a management information storage means for storing management information representing a condition of a different network device,
the information processing method comprising:
receiving transmission data from a predetermined network device, the transmission data including the management information of the predetermined network device;
updating and storing the management information included in the transmission data into the management information storage means in a case that the management information included in the transmission data being received from the predetermined network device is changed with respect to management information stored in the management information storage means; and
transmitting change management information that is information based on the changed management information to still another network device, and also transmitting the change management information to a network device as a transmission destination, the network device being specified based on information included in the transmission data being received from the predetermined network device.

### (Supplementary Note 10)

The information processing method according to Supplementary Note 9, wherein the management information included in the transmission data being received from the predetermined network device includes network specification information for specifying a network to which the predetermined network device belongs, and
the information processing method comprising:
specifying a network device belonging to the network being specified based on the network specification information included in the transmission data received from the predetermined network device, and transmitting the change management information to the specified network device as a transmission destination.

The above-described program is stored in a storage device or a computer-readable storage medium. For example, the storage medium is a medium having portability such as a flexible disk, an optical disk, a magneto-optical disk and a semiconductor memory.

Although the present invention is described above referring to the exemplary embodiment, the present invention is not limited to the exemplary embodiment. The configurations and details of the present invention can be changed and modified in various manners that can be understood by one skilled in the art within the scope of the present invention.

The present invention is based upon and claims the benefit of priority from Japanese patent application No. 2012-185520, filed on August 24, 2012, the disclosure of which is incorporated herein in its entirety by reference.

### DESCRIPTION OF REFERENCE NUMERALS

- 1: information processing device
- 11: reception means
- 12: management information update means
- 13: transmission means
- 21: management information storage means
- 101-105: network device
- 201: LLDP information database
- 202: LLDP MIB-A
- 203: LLDP MIB-B
- 204: packet switch
- 205: packet identification circuit
- 206: packet interface circuit
- 207: comparison circuit
- 208: packet generation circuit

## Claims

1. An information processing device which is connected with a network configured by connecting a plurality of network devices, the information processing device comprising:
a management information storage means for storing management information that is information representing a condition of a different network device;
a reception means for receiving transmission data from a predetermined network device, the transmission data including the management information of the predetermined network device;
a management information update means for updating and storing the management information included in the transmission data into the management information storage means in a case that the management information included in the transmission data being received from the predetermined network device is changed with respect to management information stored in the management information storage means; and
a transmission means for transmitting change management information that is information based on the changed management information, to still another network device, wherein the transmission means transmits the change management information to a network device as a transmission destination, the network device being specified based on information included in the transmission data being received from the predetermined network device.

2. The information processing device according to claim 1 wherein:
the management information included in the transmission data being received from the predetermined network device includes network specification information for specifying a network to which the predetermined network device belongs, and
the transmission means specifies a network device belonging to the network being specified based on the network specification information included in the transmission data received from the predetermined network device, and transmits the change management information to the specified network device as a transmission destination.

3. The information processing device according to claim 1, wherein:
the management information included in the transmission data being received from the predetermined network device includes device specification information for specifying a network device, and
the transmission means transmits the change management information to a network device as a transmission destination, the network device being specified based on the network device specification information included in the transmission data being received from the predetermined network device.

4. The information processing device according to claim 1, wherein the transmission means specifies a network device based on the changed management information, and transmits the change management information to the specified network device as a transmission destination.

5. The information processing device according to any of claims 1 to 4, wherein the management information update means
stores temporally the management information included in the transmission data being received from the predetermined network device,
compares the management information included in the transmission data being received from the predetermined network device with management information stored in the management information storage means, and as a result of comparing,
in a case that the management information included in the transmission data is changed with respect to the management information being stored in the management information storage means,
notifies the transmission means to transmit the change management information and subsequently,
updates and stores the management information included in the transmission data being temporally stored into the management information update means.

6. The information processing device according to any of claims 1 to 5, wherein the transmission data is a LLDP packet.

7. A program comprising instructions for causing an information processing device, the information processing device being connected with a network configured by connecting a plurality of network devices, and the information processing device being equipped with a management information storage means for storing management information representing a condition of a different network device, to realize:
a reception means for receiving transmission data from a predetermined network device, the transmission data including the management information of the predetermined network device;
a management information update means for updating and storing the management information included in the transmission data into the management information storage means in a case that the management information included in the transmission data being received from the predetermined network device is changed with respect to management information stored in the management information storage means; and
a transmission means for transmitting change management information that is information based on the changed management information, to still another network device, wherein the transmission means transmits the change management information to a network device as a transmission destination, the network device being specified based on information included in the transmission data being received from the predetermined network device.

8. The program according to claim 7, wherein:
the management information included in the transmission data being received from the predetermined network device includes network specification information for specifying a network to which the predetermined network device belongs, and
the transmission means specifies a network device belonging to the network being specified based on the network specification information included in the transmission data received from the predetermined network device, and transmits the change management information to the specified network device as a transmission destination.

9. An information processing method applied to an information processing device, the information processing device being connected with a network configured by connecting a plurality of network devices, and the information processing device being equipped with a management information storage means for storing management information representing a condition of a different network device,
the information processing method comprising:
receiving transmission data from a predetermined network device, the transmission data including the management information of the predetermined network device;
updating and storing the management information included in the transmission data into the management information storage means in a case that the management information included in the transmission data being received from the predetermined network device is changed with respect to management information stored in the management information storage means; and
transmitting change management information that is information based on the changed management information to still another network device, and also transmitting the change management information to a network device as a transmission destination, the network device being specified based on information included in the transmission data being received from the predetermined network device.

10. The information processing method according to claim 9, wherein the management information included in the transmission data being received from the predetermined network device includes network specification information for specifying a network to which the predetermined network device belongs, and
the information processing method comprising:
specifying a network device belonging to the network being specified based on the network specification information included in the transmission data received from the predetermined network device, and transmitting the change management information to the specified network device as a transmission destination.
